# EUROPEAN PATENT SPECIFICATION

(11) **EP 1 868 945 B1**
(45) Date of publication and mention of the grant of the patent: **17.03.2010**
(21) Application number: 06726712.0
(22) Date of filing: 10.04.2006
(51) Int. Cl.: C02F 1/34, C02F 1/72

(54) **METHOD FOR GENERATING HYDROXYL RADICALS**
VERFAHREN ZUR ERZEUGUNG VON HYDROXYL-RADIKALEN
METHODE DE GENERATION DE RADICAUX HYDROXYLE

(30) Priority: 09.04.2005 GB 0507233
(43) Date of publication of application: 26.12.2007
(73) Proprietor: University of Abertay Dundee, Dundee DD1 1HG (GB)
(72) Inventor: NAMKUNG , Kyu Cheol, Dundee DD4 6NW (GB); BREMNER, David H., Dundee DD3 6HY (GB); BURGESS, Arthur Ernest, Fintry Glasgow G6 3 0XG (GB)
(74) Representative: Wilson, Gary
(86) International application number: PCT/GB2006/001311
(87) International publication number: WO 2006/109043

(56) References cited:
- US-A1- 2003 173 306
- OH S-Y ET AL: "Enhancing Fenton oxidation of TNT and RDX through pretreatment with zero-valent iron" WATER RESEARCH, ELSEVIER, AMSTERDAM, NL, vol. 37, no. 17, October 2003 (2003-10), pages 4275-4283, XP004448718 ISSN: 0043-1354
- ENTEZARI M H ET AL: "A combination of ultrasound and inorganic catalyst: removal of 2-chlorophenol from aqueous solution" ULTRASONICS: SONOCHEMISTRY, BUTTERWORTH-HEINEMANN, GB, vol. 12, no. 1-2, January 2005 (2005-01), pages 137-141, XP004594880 ISSN: 1350-4177
- BECKETT M A ET AL: "Enhanced sonochemical decomposition of 1,4-dioxane by ferrous iron" WATER RESEARCH, ELSEVIER, AMSTERDAM, NL, vol. 37, no. 10, May 2003 (2003-05), pages 2372-2376, XP004421941 ISSN: 0043-1354
- ENTEZARI M H ET AL: "Sonochemical degradation of phenol in water: a comparison of classical equipment with a new cylindrical reactor" ULTRASONICS: SONOCHEMISTRY, BUTTERWORTH-HEINEMANN, GB, vol. 10, no. 2, March 2003 (2003-03), pages 103-108, XP004404908 ISSN: 1350-4177

## Description

This invention relates to a method and apparatus for generating hydroxyl radicals, particularly but not exclusively for degrading organic pollutants present in water.

Water pollutants, particularly carbon based pollutants, pose a health hazard. A measure of the organic carbon content in water can be expressed as the Total Organic Carbon (TOC) and this measurement is often used to determine the safety of water for disposal into the environment or for drinking.

Hydroxyl radicals have been used to degrade organic pollutants present in water. The hydroxyl radical is a highly reactive oxidising agent, the second most powerful oxidant in nature, after fluorine. Table 1 compares the oxidising power of several frequently used oxidants.

**Table 1 Comparison of oxidising power of selected oxidants [1]**

| **Species** | **Oxidation Potential (V)** |
|---|---|
| Fluorine (F₂) | -3.03 |
| Hydroxyl radical (•OH) | -2.80 |
| Ozone (O₃) | -2.07 |
| Hydrogen peroxide (H₂O₂) | -1.78 |
| Chlorine (Cl₂) | -1.36 |

Ultrasonic irradiation of water produces hydroxyl radicals through water molecular cleavage according to equation (1) below.

H₂O → H• + •OH (1)

Several well-established methods for the detection of hydroxyl radicals generated from ultrasonic irradiation of water are available. Table 2 shows a summary of these methods which measure the amount of radiation that a sample is subjected to.[2]

**Table 2 Dosimetric methods for detection of hydroxylradicals induced by ultrasonic irradiation in water**

| **Method** | **General** |
|---|---|
| Terephthalate method | Hydroxylated terephthalate is detected using fluorescence measurements. |
| Iodometric method | I₃⁻ complex generated is measured using a UV/Vis spectrophotometer. |
| Fricke dosimetric method | Fe³⁺ generated by oxidation of Fe²⁺ is monitored using a UV/Vis spectrophotometer. |

Several researchers have investigated hydrodynamic cavitation and compared it to acoustic cavitation using the iodometric method and concluded that there is a close similarity between these two different cavitation phenomena [3,4].

US Patent No 4,129,387 (Grange) discloses the use of a liquid whistle reactor for homogenising liquids and emulsions. The two-phase liquid is forced through an orifice and contacts a blade which vibrates at an ultrasonic frequency causing cavitation and emulsification of the previously two-phase mixture.

US Patent 2003/0173306 (Cha et al.) discloses a method of generating hydroxyl radicals, typical in the art.

In recent years there has been an improvement in the type of materials used, the pressures developed and the control of hydrodynamic cavitation. Thus, liquid whistle reactors have been employed for homogenisation, dispersion and disinfection [6a,b,c] and paper de-inking [6d]. A similar system involving Controlled Flow Cavitation was utilised in the synthesis of advanced catalysts and nano-materials [7a,b]. Moholkar et al. [8] have carried out a comparative study of hydrodynamic (but not ultrasonic whistle) and acoustic cavitation on the basis of the Rayleigh-Plesset equation. The simulations revealed that the bubble/cavity collapsing behaviour is accompanied by a large number of pressure pulses of relatively smaller magnitude, compared to just one or two pulses under acoustic cavitation.

Hydrodynamic cavitation appears to offer greater control of operating parameters and resultant cavitation intensity and that six times more product is obtained over acoustic cavitation at the same level of energy input [9]. HydroDynamics Inc has pioneered a novel system for producing shock waves for the purpose of transforming fluids [10a,b]. Taking a fluid into a machine housing produces the effect, where it is passed over a spinning cylinder, creating pressure differences and cavitation. Although, many claims are made for the system few experimental results have been reported [10c].

According to a first aspect of the present invention there is provided claim 1.

The steps may be conducted in any order.

The directing of liquid through the orifice can generate the hydroxyl radicals.

Preferably the liquid is pressurised before it is directed through the orifice. The pressure may be from 68,95 bar - 137,9 bar (1000 - 2000psi).

The liquid is preferably forced through said orifice.

The orifice may be 0.07 - 0.11mm in diameter, preferably 0.08 - 0.10mm in diameter, especially around 0.091mm in diameter.

Preferably the orifice is circular in shape.

Preferably the liquid exits the orifice as a narrow jet stream.

A blade device may be provided and the liquid exiting the orifice may be directed towards the edge of the blade device and preferably also over a surface of the blade device.

Typically the blade device is adapted to vib. Preferably the blade device is adapted to vibrate at ultrasonic frequencies.

Preferably the vibration of the blade device causes cavitation of the liquid although cavitation can also typically occur in embodiments without a blade. Optionally the contact between the liquid and the blade device can cause the blade device to vibrate.

Typically the blade device has opposite blade surfaces which converge to a blade edge.

Thus preferably the liquid is directed through a liquid whistle reactor, the liquid whistle reactor comprising an orifice and a blade device.

The vibration of the blade device and/or cavitation of the liquid can produce hydroxyl radicals, typically as well as the hydroxyl radicals produced by direction of the liquid through the orifice.

The oxidising agent can be hydrogen peroxide (H₂O₂), ozone or any other oxidising agent.

Preferably the method includes the step of degrading chemicals, typically degrading organic chemicals. Typically the hydroxyl radicals generated degrade the chemicals. Thus preferably the method is used to degrade organic pollutants in liquids, such as effluents.

Preferably the organic contaminants continue to degrade after treatment. Thus preferably the treatment is conducted for a first period of time and then the total organic content continues to decrease for a second period of time, when the liquid may be left undisturbed.

The first period of time may be 5m - 1 hour, preferably 10 - 25m, especially 15 - 20m. The second period of time may be 1 - 5 hours, preferably 2 - 4 hours, especially 2.5 - 3.5 hours.

Preferably the total organic content reduces by at least 10%, more preferably at least 15%, in the second period of time.

Preferably the total organic content of liquids treated according to the present invention is up 1000ppm, preferably up to 500ppm, especially 75 - 150 ppm. Samples of a higher concentration may be diluted to fall within these preferred ranges.

Preferably the liquid is directed through the orifice in a single liquid phase, ie oil based or water based but not comprising oil and water based liquids at the same time. Preferably the liquid phase is water based. Gas, such as ozone or air may be added to the single liquid phase.

Preferably the liquid can be circulated through the orifice a plurality of times. Thus the method may comprise a continuous process.

An embodiment of the present invention will now be described, by way of example only, with reference to the accompanying drawings, in which:
Fig. la is a diagram showing an apparatus in accordance with a first embodiment of the present invention;
Fig. 1b is a plan view of a liquid whistle reactor in accordance with one embodiment of the present invention;
Fig. 2a is a graph showing the concentration of hydroxyl radicals formed as a function of the reaction time through a liquid whistle reactor in accordance with one embodiment of the present invention;
Fig. 2b is a graph showing the relationship between the generation of hydroxyl radicals and pressure in accordance with one embodiment of the present invention;
Fig. 3 is a graph showing the degree of reduction of the total organic content in a phenol solution using the liquid whistle reactor in accordance with one embodiment of the present invention;
Fig. 4 is a graph showing the degree of reduction of the total organic content in a phenol solution using the liquid whistle reactor in accordance with one embodiment of the present invention, compared to two other methods, not in accordance with the present invention;
Fig. 5 is a graph showing the degree of reduction of the total organic content of a dimethylformamide solution using a liquid whistle reactor in the presence or absence of iron;
Fig. 6 is a graph showing the degree of reduction of the total organic content in a sample of pharmaceutical wastewater using a liquid whistle reactor in accordance with one embodiment of the present invention and using a conventional Fenton reaction not in accordance with the present invention
Fig. 7 is a graph showing the degree of reduction of the total organic content in a sample of recalcitrant pesticide effluent residue over a number of days;
Fig. 8 is a diagram showing an apparatus used in accordance with a second embodiment of the present invention;
Fig. 9 is a graph showing the degree of reduction of the total organic content in a phenol solution using the Fig. 8 apparatus;
Fig. 10 is a graph showing the degree of reduction of the total organic content in a phenol solution using the Fig, 8 apparatus following treatment for different time periods.

An apparatus 10 in accordance with one embodiment of the present invention is shown in Fig. la and comprises the following components all connected in series: a liquid whistle reactor 12, a stainless steel container 14 having an iron source therein, a pump 18, a water inlet 20 and water outlet 22. A bath 16 is provided around the container 14 in order to cool the water during use. Some experiments, detailed below, were performed with a modified apparatus (not shown) which includes the components of the apparatus 10 except it does not have the container 14 and bath 16.

The iron source may be an iron bar, iron pieces of approximately 1-2cm bent at right angles or, for example, iron powder.

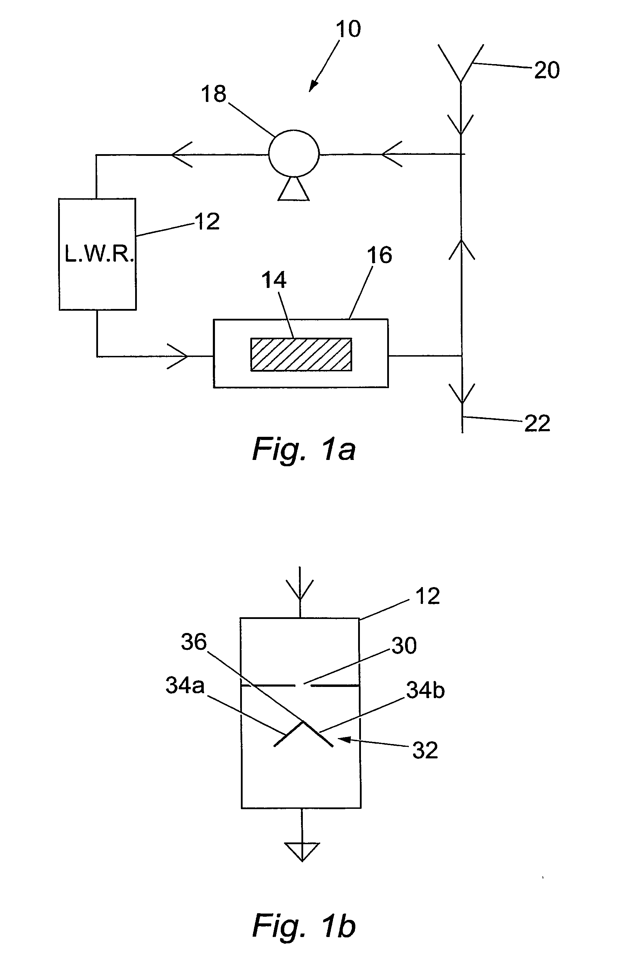

Fig. 1b shows a more detailed view of the liquid whistle reactor 12. The reactor 12 comprises an orifice 30 through which the water is directed, and a blade 32. The blade 32 has two sides 34a, 34b and an edge 36 formed by the convergence of the two sides 34a, 34b.

In use, contaminated water enters the water inlet 20 and is pumped via the pump 18 to a higher pressure, preferably exceeding 48,3 bar (700psi), more preferably between 68,95 bar - 137,9 bar (1000 - 1500 psi). In some experiments described herein (but not all), hydrogen peroxide is added as an oxidising agent.

The contaminated water enters the liquid whistle reactor 12 where it is forced through the orifice 30 thereby subjecting the water to high pressure and high shear.

The contaminated water proceeds, as a jet stream, to the blade 32. The blade 32 in turn vibrates at ultrasonic frequencies causing cavitation of the contaminated water proceeding over the surfaces 34a, 34b of the blade 32. As a consequence, hydroxyl radicals are generated which react with and degrade organic contaminates present in the water.

The water proceeds through the container 14 with its iron source.

Fe²⁺ ions are preferably generated through electrochemical dissolution of the iron. The pristine ion Fe²⁺ produced reacts instantly with the substrate (eg H₂O₂) before reaching solvation equilibrium and therefore is more potent than that delivered traditionally via the addition of a ferrous salt solution prepared in advance, in which the iron (II) ions are completely solvated.

The method preferably involves generating hydroxyl radicals in a Fenton-like process (Fe²⁺ + H₂O₂ → HO^{•} + HO⁻ + Fe³⁺).

Thus some hydroxyl radicals are generated in the liquid whistle reactor 12, and some can be generated by the iron and oxidant. The cavitational effects provided by the liquid whistle reactor 12 will persist downstream of the liquid whistle reactor 12 and will help clean the surface of the metal and aid some dissociation of the metal to metal ions. The effect of the liquid whistle reactor 12 during subsequent passes is enhanced by the presence of iron ions and hydrogen peroxide.

Typically the contaminated water is circulated through the apparatus 10 a number of times in order to degrade the contaminants present. Once the contaminants have been reduced to desired levels, the water can proceed out of the apparatus 10 via the water outlet 22.

In operation, contaminated water may be continuously added via the inlet 20 and water with the degraded contaminants may be continuously removed via the outlet 22, thus allowing a continuous process to be established.

As a short-lived reactive species, the generation and presence of hydroxyl radicals can be difficult to detect directly. Here, the terephthalate method was used to detect the generation of hydroxyl radicals produced by the liquid whistle reactor 12.

Terephthalate reacts with hydroxyl radicals to form hydroxyterephthalate and the concentration of hydroxyterephthalate can be readily detected by fluorescence. The presence of hydroxyterephthalate is indicative of the generation of hydroxyl radicals and its concentration is also proportional to the concentration of hydroxyl radicals.

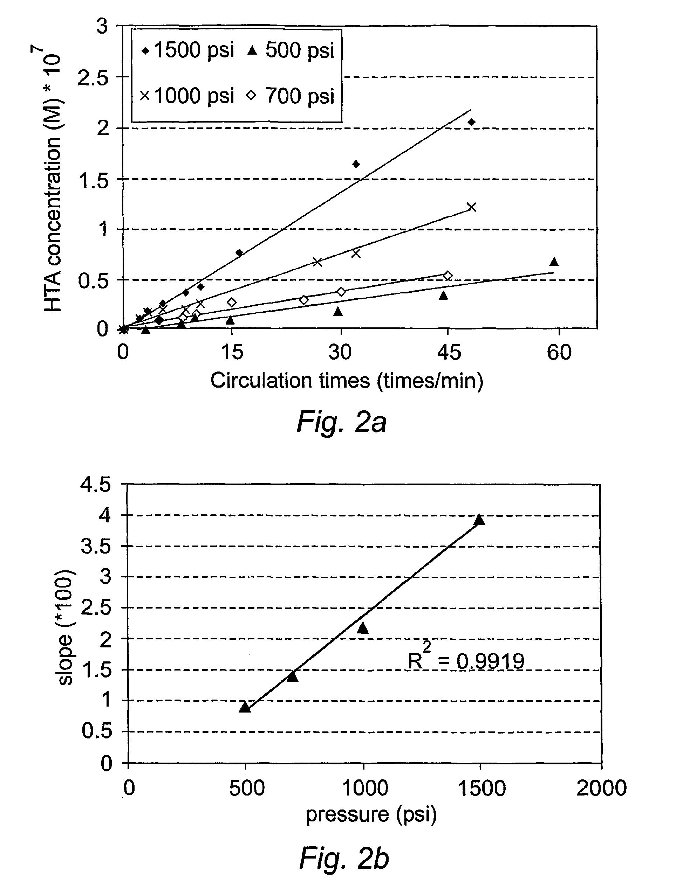

The concentration of hydroxyterephthalate found when using the apparatus 10 of Fig. 1a, but without the iron source in the container 14, is shown in Fig. 2a.

It can be observed that the hydroxyl radicals continue to be generated as the water is circulated around the apparatus 10, since the concentration of hydroxyterephthalate rises linearly with the number of circulations.

The pressure at which the water flows through the liquid has also been found to affect the concentration of hydroxyterephthalate and thus the generation of hydroxyl radicals. Fig. 2b shows the proportional relationship between hydroxyl radical generation and pressure.

### Treatment of pollutants

Phenol is one of the aromatic compounds most frequently used across various industries such as chemical, pharmaceutical, and electronic/semiconductor industries and previously was investigated as a model pollutant to test the performance of sonochemical reactors [11].

As a model pollutant, phenol was treated using the apparatus 10 including the container 14 with the iron source. The degradation of phenol was measured by reduction of total organic carbon (TOC) content because it can be converted into several stable intermediates, which are not indicative of degradation. A reduction in the TOC is observed when using a liquid whistle reactor 12 with an iron source (in the container 14) or with hydrogen peroxide. However a dramatic reduction in TOC is observed when utilising all three of the liquid whistle reactor 12, the iron source and hydrogen peroxide.

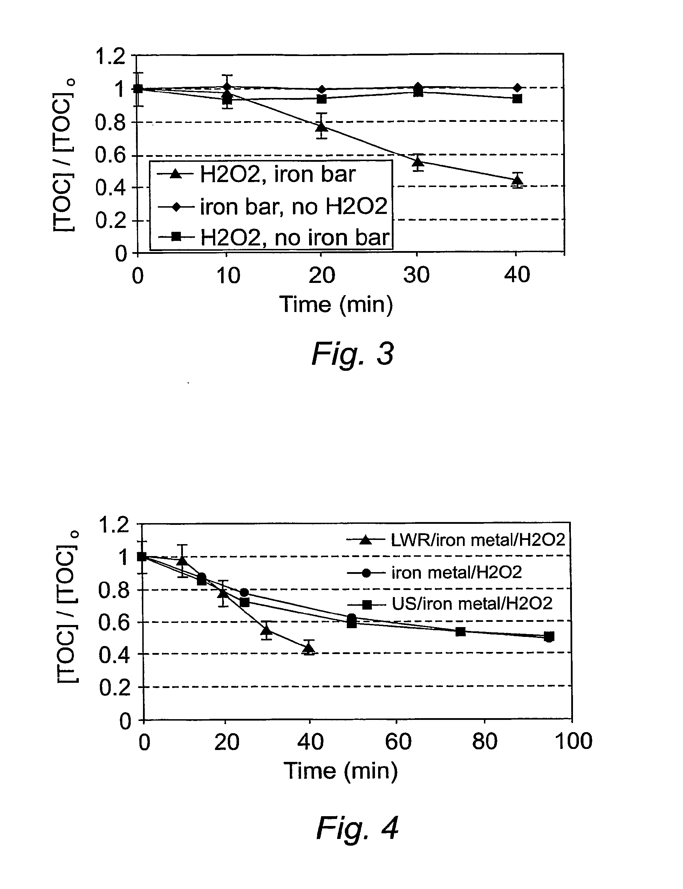

A comparison of the phenol degradation using the iron source and hydrogen peroxide and (a) in the absence of any external energy, (b) using an ultrasonic bath sonicator and (c) using a liquid whistle reactor 12 is shown in fig 4. Over 40 minutes, a combination of only iron metal and hydrogen peroxide gives a small amount of degradation of phenol; the use of ultrasound, iron metal, hydrogen peroxide is marginally better. However, the combination of the liquid whistle reactor 12, iron metal and hydrogen peroxide is significantly better at degrading phenol.

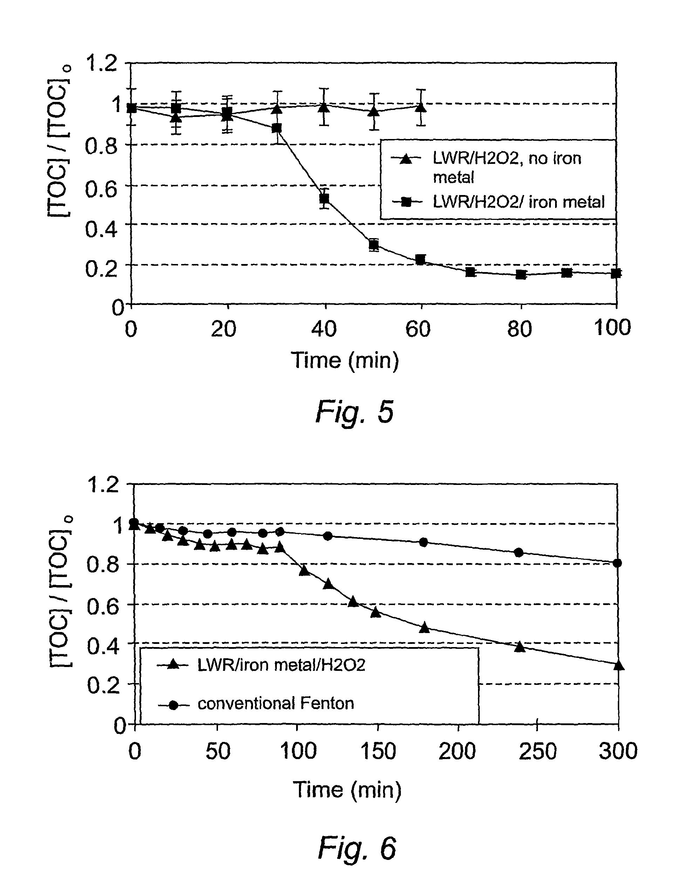

The degradation of dimethylformamide (as a model pollutant) using the apparatus 10 in the presence or absence of the iron metal was also investigated and the results are shown in Fig. 5.

As observed for phenol, only a slight reduction in TOC was observed using the liquid whistle reactor 12 and hydrogen peroxide without iron metal. With iron metal, as well as the liquid whistle reactor 12 and hydrogen peroxide, a huge increase in TOC removal occurred.

Fig. 6 shows treatment of a pharmaceutical wastewater using the apparatus 10. The wastewater was sampled from a mixed effluent from a pharmaceutical manufacturing company and was treated in the laboratory after dilution. For comparison, the conventional Fenton process was used for treatment of the same diluted wastewater.

The conventional Fenton process comprises the simultaneous addition of an equimolar amount of both ferrous salts and hydrogen peroxide to the pollutant at a pH of approximately 2.

As shown in Fig. 6, the liquid whistle reactor system showed a far better oxidation performance than the conventional Fenton system.

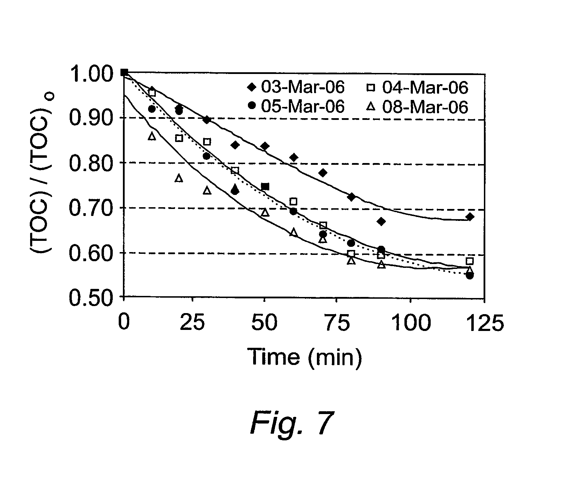

In Fig. 7, results are shown for a number of samples of recalcitrant pesticide effluent residue treated using the Fig. la apparatus. In these experiments, the pressure was 137,9 bar (1500psi), the pH was 2.5, the hydrogen peroxide content was 1900mg/L (~55.86 mM). Each sample was treated for a different period of time, ranging from 15 minutes to 120 minutes. The TOC content was then measured, and measured again in following days for each sample. As can be seen from the diagram, the TOC content continues to fall even days after the treatment.

Thus embodiments of the present invention can be used to treat wastewater and degrade organic molecules therein.

Therefore, the system according to embodiments of the invention including a liquid whistle reactor is believed to be a powerful tool for wastewater treatment. An increased number of hydroxyl radicals can be generated by the interaction of iron metal and hydrogen peroxide under the activation of hydrodynamic cavitation produced by water passing through an orifice compared to ordinary hydrodynamic cavitation tools [12] .

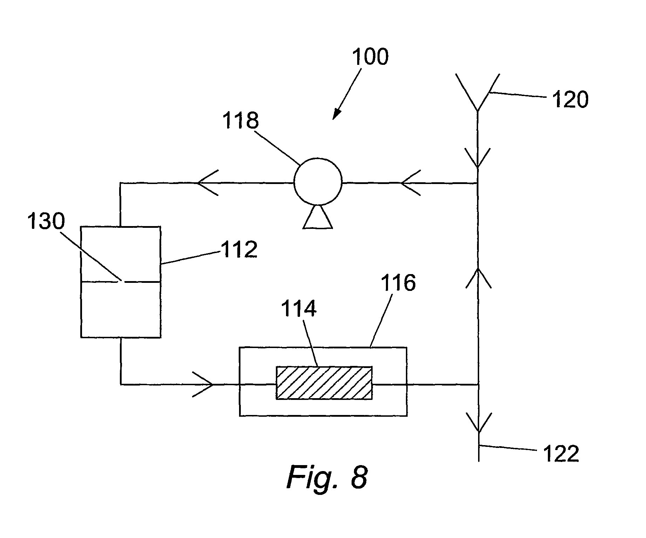

Fig. 8 shows a modified embodiment of the invention comprising like features compared to the Fig. la apparatus namely: a stainless steel container 114 with a bath 116 therearound, the container 114 having an iron source therein, a pump 118, a water inlet 120 and water outlet 122.

in contrast to the previous embodiment, a hydrocavitator 112 is used in place of a liquid whistle reactor. The hydrocavitator 112 comprises an orifice 130 through which the liquid is directed, but it does not include any blades.

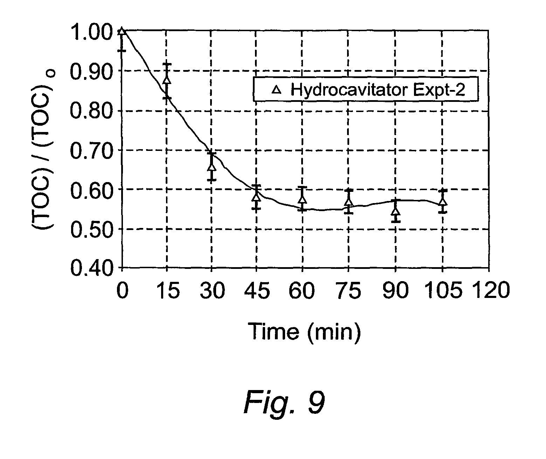

Fig. 9 shows the TOC content reduction of samples degraded using the hydrocavitator. In the Fig. 9 experiment, the following conditions were used:
- Phenol concentration =: 2.5 mM
- Initial pH =: 2.5
- H₂O₂ concentration =: 2000 mg/L = 58.8mM
- Iron pieces =: 100 (140g)
- Volume of solution =: 8 L
- Pressure =: 137,9 bar (1500 psi)

The results shown in Fig. 9 demonstrate the hydrocavitator 112 (which does not include any blades) is successful in reducing the TOC by around 45%.

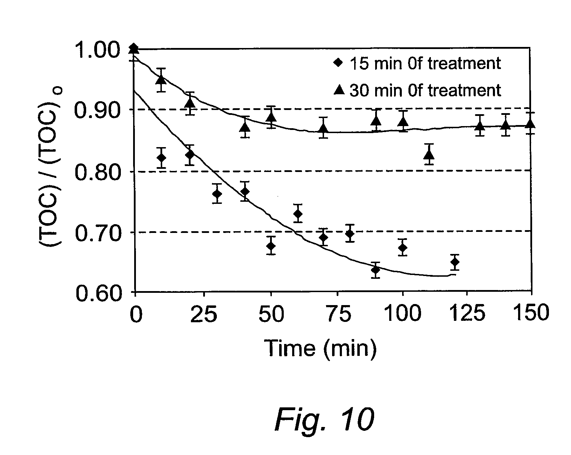

In Fig. 10, the subsequent reduction of TOC content after treatment for 15 and 30 minutes is shown. The experimental conditions for the Fig. 10 experiments are as follows:
Phenol Concentration = 2.5 mM
H₂O₂ concentration = 2000 mg/L -58.8 mM
pH = 2.5
Pressure = 137,9 bar (1500 psi)
Iron pieces = 142 g, 100pieces

The starting point for the Fig. 10 graphs is the amount of carbon content immediately after the treatment has finished. Thus the graph showing the 30 minute treatment has less subsequent TOC reduction than that showing the 15 minute treatment since it was degraded more during treatment. As seen in Fig. 9, there is approximately a 12% reduction in TOC after 15 minutes and 35% reduction after 30 minutes. Fig. 10 shows that reduction in TOC continues after the treatment. The 30 minute treatment continues to decay for a further -14%; the 15 minute treatment continues to decay for a further ~35% thus each totalling total TOC reduction of ~50%.

Thus this shows that continued degradation of the organic content occurs after treatment and that extending the treatment time need not increase the total TOC reduction.

Embodiments of the present invention benefit in that they can be used as a continuous process with polluted water continuously being introduced and removed from a circuit comprising the liquid whistle reactor and preferably iron and hydrogen peroxide.

Further benefits of certain embodiments of the invention are that they can require less energy than certain known systems and can operate at a lower noise level than certain existing systems.

### References

1. Legrini, O., Oliveros, E., and Braun, A. M., "Photochemical processes for water treatment," Chemical Reviews, 671-698 (1993).
2. Iida, Y., Yasui, K., Tuziuti, T. and Sivakumar, M., "Sonochemistry and its dosimetry," Microchemical Journal (in press) (2004).
3. Suslick, K. S., Mdleleni, M. M. and Ries, J. T., "Chemistry induced by hydrodynamic cavitation," Journal of American Chemical Society, 9303-9304 (1997).
4. Kumar, P.S., Kumar, M.S. and Pandit, A.B., "Experimental quantification of chemical effects of hydrodynamic cavitation," Chemical Engineering Science, 1633-1639 (2000).
6. (a) GB Patent No. 1,015,962. (b) E.J. Murry, Chem. Technol., 1975, 5, 232. (c) T.J. Mason, Lab. Equip Dig., 1987, 99. (d) W.E. Scott and P. Gerber, Tappi Journal, 1995, 78, 125.
7. (a) W.R. Moser, J. Find, S.C. Emerson and I.M. Krausz, Advances in Chemical Engineering, 2001, 27, 1; (b) Controlled Flow Cavitation, Five Star Technologies: www.fivestartech.com
8. V.S. Moholkar, P.S. Kumar and A.B. Pandit, Ultrasonics Sonochem., 1999, 6, 53.
9. G.V. Ambulgekar, S.D. Samant and A.B. Pandit, Ultrasonics Sonochem., 2004, 11, 191.
10. See (a) www.hydrodynamics.com; (b) U.S Patent No 5188090; (c) K.M. Kalumuck, G.L. Chahine, C.-T. Hsiao and J.-K. Choi, Abstr. Cav03-OS-2-2-003: Fifth International Symposium on Cavitation (CAV2003), Osaka, Japan, Nov. 1-4, 2003.
11. Gogate, P.R., Mujumdar, S., Thampi, J., Wilhelm, A. M., and Pandit, A. B., "Destruction of phenol using sonochemical reactors: scale up aspects and comparison of novel configuration with conventional reactors," Separation and Purification Technology, 25-34 (2004).
12. Sivakumar, M. and Pandit, A. B., "Wastewater treatment: a novel energy efficient hydrodynamic cavitational technique" Ultrasonics Sonochemistry, 123-31 (2002).

## Claims

1. A method for generating hydroxyl radicals, the method comprising the steps of: exposing a liquid comprising water and an oxidising agent to zero valent iron, thereby generating hydroxyl radicals; and
directing the liquid through an orifice wherein the liquid undergoes hydrodynamic cavitation, thereby generating hydroxyl radicals from the liquid.

2. A method as claimed in claim 1, wherein the oxidising agent is hydrogen peroxide.

3. A method as claimed in any of claims 1 or 2, wherein the liquid is pressurised to at least 1000psi before it is directed through the orifice.

4. A method as claimed in any preceding claim, wherein the liquid is circulated through the orifice a plurality of times.

5. A method as claimed in any preceding claim, wherein the hydroxyl radicals generated degrade organic chemicals in the liquid.

6. A method as claimed claim 5, further comprising:
- performing said steps for a first period of time of up to four hours to reduce the organic content in the liquid:
- stopping said steps and allowing the organic content to continue to decrease for a second period of time of up to 5 hours; wherein the total organic content decreases by at least 10% in said second period of time.

7. A method as claimed in claim 5 or 6, wherein the total organic content of the liquid is from 75 -150 ppm.

8. A method as claimed in any preceding claim, wherein the liquid is directed through the orifice in a single liquid phase.

9. A method as claimed in any preceding claim, wherein a blade device is provided and the liquid exiting the orifice is directed towards the edge of the blade device and over a surface of the blade device.

10. A method as claimed in claim 9, wherein the blade device has opposite blade surfaces which converge to a blade edge.

## Patentansprüche

1. Verfahren zum Erzeugen von Hydroxylradikalen, wobei das Verfahren die Schritte beinhaltet:
Beaufschlagen einer Flüssigkeit, die Wasser und ein Oxidationsmittel umfasst, mit nullwertigem Eisen, um **dadurch** Hydroxylradikale zu erzeugen; und
Leiten der Flüssigkeit durch eine kleine Öffnung, wobei die Flüssigkeit hydrodynamische Kavitation erfährt, um **dadurch** Hydroxylradikale aus der Flüssigkeit zu erzeugen

2. Verfahren nach Anspruch 1, wobei das Oxidationsmittel ein Wasserstoffperoxid ist.

3. Verfahren nach Anspruch 1 oder 2, wobei die Flüssigkeit bis wenigstens 68,95 bar (1000 psi) unter Druck gesetzt wird, bevor sie durch die kleine Öffnung geleitet wird.

4. Verfahren nach einem der vorhergehenden Ansprüche, wobei die Flüssigkeit mehrmals durch die kleine Öffnung hindurchgeleitet wird.

5. Verfahren nach einem der vorhergehenden Ansprüche, wobei die Hydroxylradikale, die erzeugt werden, organische Chemikalien in der Flüssigkeit abbauen.

6. Verfahren nach Anspruch 5, weiter beinhaltend:
- Ausführen der Schritte für eine erste Zeitspanne von bis zu vier Stunden, um den Gehalt an organischer Substanz in der Flüssigkeit zu reduzieren;
- Stoppen der Schritte und Gestatten, dass der Gehalt an organischer Substanz für eine zweite Zeitspanne von bis zu 5 Stunden weiterhin abnimmt, wobei der Gehalt an organischer Substanz in der zweiten Zeitspanne um wenigstens 10% abnimmt.

7. Verfahren nach Anspruch 5 oder 6, wobei der Gesamtgehalt an organischer Substanz der Flüssigkeit 75-150 ppm beträgt.

8. Verfahren nach einem der vorhergehenden Ansprüche, wobei die Flüssigkeit in einer einzelnen flüssigen Phase durch die kleine Öffnung hindurchgeleitet wird.

9. Verfahren nach einem der vorhergehenden Ansprüche, wobei eine Schaufelvorrichtung vorhanden ist und die Flüssigkeit, welche die kleine Öffnung verlässt, auf die Kante der Schaufelvorrichtung und über eine Oberfläche der Schaufelvorrichtung geleitet wird.

10. Verfahren nach Anspruch 9, wobei die Schaufelvorrichtung entgegengesetzte Schaufelflächen hat, welche zu einer Schaufelkante konvergieren.

## Revendications

1. Procédé pour générer des radicaux hydroxyle, le procédé comprenant les étapes consistant à :
exposer un liquide comprenant de l'eau et un agent d'oxydation à du fer de valence nulle, pour générer ainsi des radicaux hydroxyle ; et
faire passer le liquide par un orifice où le liquide subit une cavitation hydrodynamique, pour générer ainsi des radicaux hydroxyle à partir du liquide.

2. Procédé selon la revendication 1, dans lequel l'agent d'oxydation est le peroxyde d'hydrogène.

3. Procédé selon l'une quelconque des revendications 1 ou 2, dans lequel le liquide est pressurisé à au moins 1000 psi avant de passer par l'orifice.

4. Procédé selon l'une quelconque des revendications précédentes, dans lequel on fait passer plusieurs fois le liquide par l'orifice.

5. Procédé selon l'une quelconque des revendications précédentes, dans lequel les radicaux hydroxyle générés dégradent les composés chimiques organiques présents dans le liquide.

6. Procédé selon la revendication 5, comprenant en outre les étapes consistant à :
- mettre en oeuvre lesdites étapes pendant une première période de temps d'une durée pouvant aller jusqu'à quatre heures pour diminuer la teneur organique du liquide ;
- interrompre lesdites étapes pour permettre à la teneur organique de continuer à diminuer pendant une seconde période de temps pouvant aller jusqu'à 5 heures ; la teneur organique totale diminuant d'au moins 10 % au cours de ladite seconde période de temps.

7. Procédé selon les revendications 5 ou 6, dans lequel la teneur organique totale du liquide est de 75 à 150 ppm.

8. Procédé selon l'une quelconque des revendications précédentes, dans lequel on fait passer le liquide par l'orifice dans une phase liquide unique.

9. Procédé selon l'une quelconque des revendications précédentes, dans lequel un dispositif à lame est utilisé et le liquide sortant de l'orifice est dirigé vers le fil du dispositif à lame et sur une surface du dispositif à lame.

10. Procédé selon la revendication 9, dans lequel le dispositif à lame a des surfaces de lame opposées qui convergent vers un fil de lame.
